# EUROPEAN PATENT APPLICATION

(11) **EP 0 948 183 A1**
(43) Date of publication of application: **06.10.1999**
(21) Application number: 98302591.7
(22) Date of filing: 02.04.1998
(51) Int. Cl.: H04M 3/54, H04Q 7/22

(54) **Selective call forwarding on dropout**

(71) Applicant: ICO Services Ltd., London W6 9BN (GB)
(72) Inventor: Shepherd, Philip, London SW15 1JY (GB); Green, Jeremy, London N10 3 HT (GB); Chambers, Paul, High Wycombe, Bucks, HP13 7LJ (GB)
(74) Representative: Read, Matthew Charles

(57) **Abstract**

A telecommunications network such as a satellite network, includes call forwarding equipment (MSSC 1, VLR_{SAT} 1) for automatically forwarding a call made over a telecommunications link (3) through the network between first and second telecommunications stations (1, UT 1), in the event that the link drops out during the call, to a selectible alternative termination (5, 6 or UT 1 via PLMN 12). The alternative termination is selected prior to the dropout.

## Description

This invention relates to forwarding a call made over a telecommunications link between first and second telecommunication stations, in the event that the link drops out during the call. The invention has particular but not exclusive application to mobile telecommunications systems such as satellite or land-based cellular networks.

Terrestrial mobile telecommunications systems are well known and a number of different systems have developed which operate according to different standards. These public land mobile networks (PLMNs) may operate according to analog or digital standards. In Europe, the Far East, excluding Japan and elsewhere, the digital Global System Mobile (GSM) network has become popular, whereas in USA, networks which operate according to the IS-41 recommendations such as the Advanced Mobile Phone System (AMPS) and the Digital American Mobile Phone System (DAMPS) are used. In Japan, the Personal Handiphone System (PHS) and the Personal Digital Communication (PDC) network are in use. More recently, proposals have been made for a Universal Mobile Telecommunications System (UMTS). These networks are all cellular and land-based but have differences in architecture and use different signalling protocols and transmission frequency bands.

Mobile telecommunication systems have been proposed that use satellite communication links between mobile user terminals and conventional terrestrial networks such as PSTNs and PLMNs. One network known as the IRIDIUM ™ satellite cellular system is described in EP-A-0365885 and US Patent No. 5 394 561 (Motorola), which makes use of a constellation of so-called low earth orbit (LEO) satellites, that have an orbital radius of 780 km. Mobile user terminals such as telephone handsets establish a link to an overhead orbiting satellite, from which a call can be directed to another satellite in the constellation and then typically to a ground station which is connected to conventional land-based networks.

Alternative schemes which make use of so-called medium earth orbit (MEO) satellite constellations have been proposed with an orbital radius in the range of 10-20,000 km and reference is directed to Walker J.G. "Satellite Patterns for Continuous Multiple Whole Earth Coverage" Royal Aircraft Establishment, pp 119-122 (1977). Reference is directed to the ICO™ satellite cellular system described for example in GB-A-2 295 296, and to the ODYSSEY ™ satellite cellular system described in EP-A- 0 510 789. With these systems, the satellite communication link does not permit communication between adjacent satellites and instead, a signal from a mobile user terminal such as a mobile handset is directed firstly to the satellite and then directed to a ground station or satellite access node (SAN), connected to conventional land-based telephone network. This has the advantage that many components of the system are compatible with known digital terrestrial cellular technology such as GSM. Also simpler satellite communication techniques can be used than with a LEO network.

A problem arises with all satellite-based systems in that there is a risk that the communication path between the satellite and the mobile user terminal will become obscured by buildings or other objects during a call, with the result that the communication link drops out and the call is interrupted. Also, the handset may move out of range for the satellite. Dropout can also arise in conventional terrestrial mobile systems either due to the communication path becoming blocked by buildings or other objects, or as a result of the user terminal moving out of range of the area covered by the mobile network.

In our WO97/23963 published on 3 July 1997, we describe a satellite based system in which the messaging service is offered in the event of a call dropout. Thus, for a call between two parties, in the event of a dropout, one of the parties records a message by means of the service in the event of the dropout, and later, the other party can retrieve the message after the dropout. In this way, it is possible to record a message which "rounds off" a conversation if the call dropout occurs at an inopportune moment in the conversation.

In accordance with the present invention, an improved call forwarding service is provided in the event of a dropout, in which the call is routed to a selectable alternative termination, the alternative termination having been selected by a user prior to the call dropout.

In accordance with the invention from a first aspect there is provided a method of forwarding a call made over a telecommunications link between first and second telecommunications stations, in the event that the link drops out during the call, including automatically forwarding the call from one of the stations to a selectible alternative termination upon the occurrence of the dropout, the alternative termination having been selected prior to the dropout.

One of the telecommunication stations may comprise a mobile user terminal and the step of selecting the alternative termination may be carried out from the user terminal prior to the dropout.

The alternative termination may comprise an alternative subscriber terminal which the user has already determined to be situated close to the location of the mobile user terminal, so that the call can conveniently be routed to the subscriber terminal to allow the mobile user to continue the call by using the alternative subscriber terminal.

The mobile user terminal may be a dual mode terminal operable with different mobile networks, for example a land-based radio network and a satellite network in which case the selected alternative termination may comprise the user terminal when reached through a second of the networks.

The alternative termination may comprise a voicemail service, which may be offered as a default in the event that no other alternative termination has been selected by the user prior to the dropout.

The invention also includes a mobile user terminal to make or receive a call over a telecommunications link, operable to select an alternative terminal for the call so that in the event that the link drops out during the call, it is automatically forwarded to the selected alternative termination upon the occurrence of the dropout.

In another aspect, the invention provides a telecommunications network including: call forwarding equipment for automatically forwarding a call made over a telecommunications link through the network between first and second telecommunications stations, in the event that the link drops out during the call, to a selectible alternative termination, and an alternative termination selection device for selecting the alternative termination, prior to the dropout.

In order that the invention may be more fully understood, an embodiment thereof will now be described by way of example with reference to the accompanying drawings, in which:
Figure 1 is a schematic diagram of a radio telecommunications network with a call forwarding facility for use in the event of a call dropout;
Figure 2 is a schematic diagram of a satellite telecommunications system together with a local land-based mobile telecommunication system, with the call forwarding facility for use in the event of a dropout, in accordance with the invention;
Figure 3 is a more detailed block diagram of the satellite network in the vicinity of SAN 1 and the associated cellular network;
Figure 4 is a schematic diagram of a mobile user terminal;
Figure 5 is a schematic block diagram of the circuit of the user terminal shown in Figure 4;
Figure 6 is a schematic diagram of call routing and alternative call terminations in the event of a call dropout for the system architecture shown in Figures 2 and 3;
Figure 7 is a schematic flow diagram of the process for selecting the alternative termination from the user terminal UT1; and
Figure 8 is a schematic block diagram of the process sets performed for rerouting a call in the event of a call dropout at SAN1.

### Overview

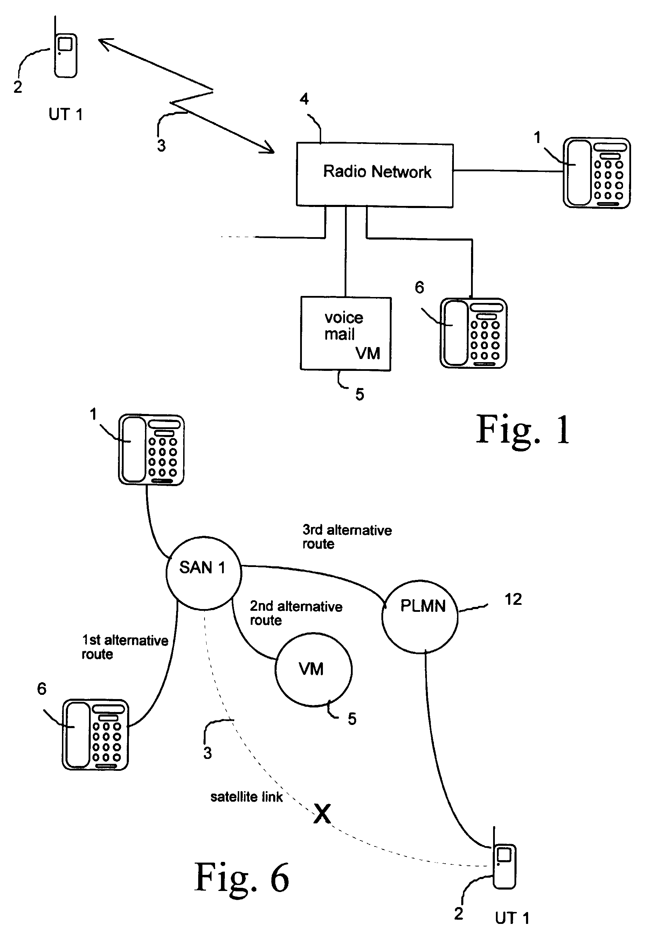

Figure 1 is a schematic block diagram for explaining the principles of the invention. A call is established between first and second telecommunications stations in the form of a conventional telephone set 1 and a mobile user terminal UT1 in the form of a mobile telephone handset 2. The call is established over a radio link 3 through a radio telecommunications network 4. As will be explained hereinafter, the network 4 may comprise a satellite network or may be constituted by a conventional public land based mobile network PLMN.

As explained in our PCT WO97/23963, there is a risk that during the call, the communication path 3 will become obscured by buildings or other objects, with the result that the communication link 3 drops out and the call is interrupted. In accordance with the invention, if a dropout occurs, the call is routed to an alternative termination, which has been selected by the user, prior to the dropout. As shown in Figure 1, the call can be routed to a voicemail facility 5 or an alternative telephone 6. The alternative termination may be selected from the user terminal UT1. For example, if the mobile user of UT1 is in a building, the user may instruct the radio network 4, through the link 3, prior to entering the building that the telephone number of telephone set 6 would be a suitable alternative termination in the event of a dropout. Thus, when the dropout occurs, the call from telephone set 1 is routed to telephone set 6 automatically, so that the call can continue. If however the mobile user is not in the vicinity of a convenient land-based telephone, the voicemail facility 5 may be selected prior to the dropout. The voicemail facility 5 may be used as a default alternative termination. Other alternative terminations can be used, as will be evident from the following description

The invention has particular application to satellite mobile telecommunications networks and an example will now be described in more detail.

### Satellite Network

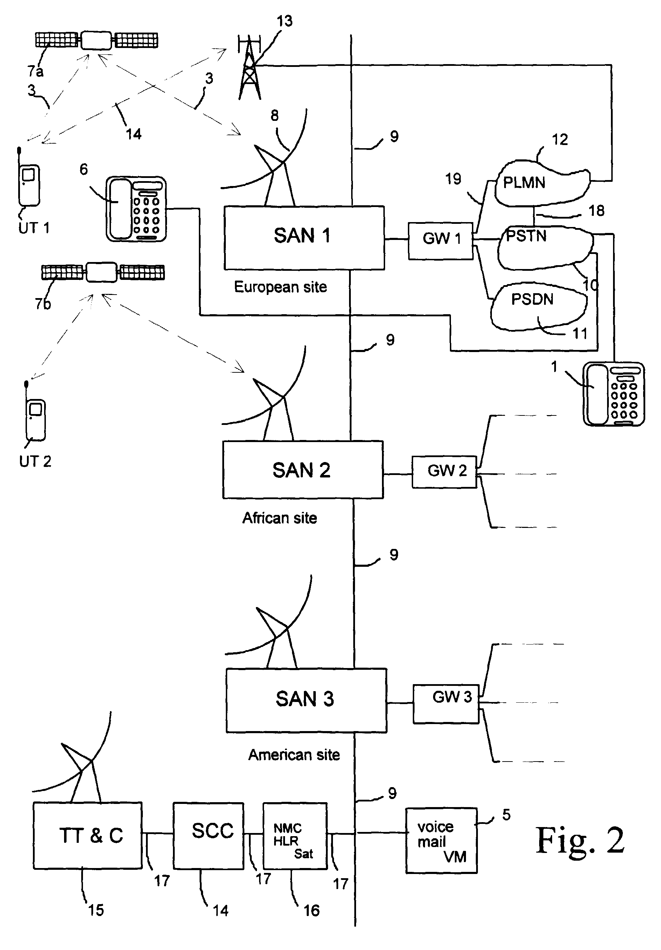

Referring to Figure 2, a schematic block diagram of a satellite mobile telecommunication network is shown corresponding generally to the ICO™ network. The mobile user terminal UT 1 can communicate on a radio channel over the communication path 3 via an earth orbiting satellite 7a with a land-based satellite access node SAN 1. As shown schematically in Figure 1, SAN 1 is provided with an antenna 8 which can track the orbiting satellite.

A number of the satellite access nodes SAN 1, 2, 3, etc are connected together to form a backbone network 9, which is connected through a number of gateways GW 1, 2, 3, etc to conventional land-based telephone networks. For example, considering the gateway GW1, it is connected to a land-based public switch telephone network (PSTN) 10, which permits connection to be made to the telephone set 1. In this example, the telephone set 6, which constitutes an alternative termination for the call in the event of a dropout, is also connected to the PSTN 10.

The gateway GW1 is additionally connected to a public switch data network (PSDN) 11 and a public local mobile network (PLMN) 12. Each of the gateways GW 1, 2, 3 may comprise commercially available mobile switching centres (MSCs) of the type used in GSM land based mobile networks. For a fuller understanding of GSM, reference is directed to the various GSM Recommendations issued by the European Telecommunications Institute (ETSI). Also reference is directed to "The GSM System for Mobile Communications" by M. Mouly and M-B. Pautet, ***supra***, for a more easily understandable synopsis.

As shown in Figure 2, the handset UT 1 can also communicate with the conventional land-based mobile network PLMN 12, which is shown schematically to include a transceiver station 13 that establishes a duplex link 14 with the user terminal UT 1. In this example, the PLMN 12 is a GSM network, although others could be used.

The satellite network is designed to provide worldwide coverage and a constellation of satellites is provided for this purpose. Two of the satellites 7a, 7b of the constellation are shown, which may be arranged in several orbits. In one example, two orbits of five satellites are used, which can be shown to provide coverage of a major part of the surface of the earth, in which for a 10° satellite elevation angle, one satellite can be accessed by the mobile handset all of the time and two satellites can be accessed for at least 80% of the time, thereby providing system diversity. Further satellites may be included in the constellation in order to provide additional redundancy and diversity.

The satellites are typically arranged in a MEO constellation, for example with an orbital radius of 10,355 km, although the invention is not restricted to a particular orbital radius. In this embodiment, satellites 7a, 7b are shown in a common orbit and the satellites are tracked by the antenna arrangement of each SAN. Typically, each SAN includes five antennas for tracking individual satellites of the constellation. The SANs are spaced around the earth in order to provide continuous coverage. In the example shown, SAN 1 may be located in Europe whereas SAN 2 may be located in Africa, SAN 3 in America and other SANs may be located elsewhere. In Figure 2, the SAN 2 is shown communicating with user terminal UT 2 via satellite 7b. For further details of the satellite network, reference is directed to GB-A-2 295 296.

The satellites 7a, 7b are in non-geostationary orbits and comprise generally conventional satellites such as the Hughes HS 601 and may include features disclosed in GB-A-2 288 913. Each satellite 7a, 7b is arranged to generate an array of beams covering a footprint on the earth beneath the satellite, each beam including a number of different frequency channels and time slots as described in GB-A-2 293 725. The beams thus provide adjacent cellular areas which correspond to the cells of a conventional land-based mobile telephone network. The satellites are controlled by means of a satellite control centre (SSC) 14 and a tracking telemetry and control station (TT&C) 15, which are connected to a network management centre (NMC) 16 through a digital network 17 that is coupled to the backbone network 9. The SSC 14 and the TT&C 15 control operation of the satellites 7a, 7b, e.g. for setting the transmission power levels and transponder input tuning, as directed by the NMC 16. Telemetry signals for the satellites 7a, 7b are received by the TT&C 15 and processed by the SSC 14 to ensure that the satellites are functioning correctly.

During a telephone call, the handset UT 1, 2 communicates with the satellite 7a, 7b via a full duplex channel comprising a down link channel and an up link channel. The channels include TDMA time slots on frequencies allocated on initiation of the call.

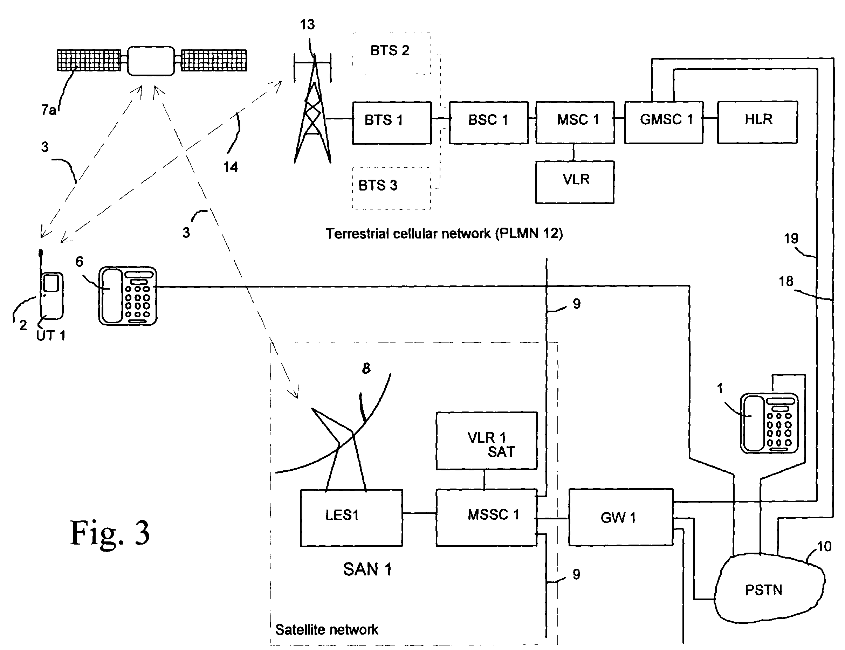

Referring to Figure 3, the configuration of SAN 1 and the local PLMN 12 is shown in more detail. SAN 1 consists of a land earth station LES 1 which is coupled to the five dish antennas 8 for tracking the satellites, the LES 1 including transmitter and receiver circuits with amplifiers, multiplexers, demultiplexers and codecs. A mobile satellite switching centre MSSC 1 is coupled to LES1 and to a satellite visitor location register VLR_{SAT}1. MSSC 1 couples communication signals (voice and packet data) to the backbone network 9 and to the LES 1, so as to allow individual telephone calls to be established through the backbone network 9 and the duplex communication link 3 via the satellite 7a, to the mobile terminal UT 1. The MSSC 1 responds to addresses on incoming communication signals from the antenna 8 to route the signals appropriately to their destinations.

The VLR_{SAT}1 maintains a record of each of the subscribers, namely the international mobile identity (IMSI) of each of the user terminals UT that are making use of the SAN 1 for signal communication.

The MSSC 1 is connected to the gateway GW1 so as to provide an output connection to PLMN 12, together with PSDN 10 and PSTN 11 shown in Figure 2. It will be understood that all the SANs are each of similar construction with a respective VLR_{SAT} to maintain a record of the subscribers registered.

The satellite network also includes a database referred to herein as the satellite home location register (HLR_{SAT}) that contains records relating to each mobile user terminal UT for the satellite network. The record includes the terminal's identity, namely, its IMSI, the geographical location of the UT, the home MSSC with which the UT is registered, so as to enable billing and other data to be collected at a single point, and the currently active SAN with which the UT is in communication via a satellite. The HLR_{SAT} may be located at the NMC 16 as shown in Figure 2 or may be distributed among the SANs 1, 2, 3 etc.

As shown in Figure 2, the voicemail facility 5 is connected to the backbone network 9, to provide voicemail for calls made through the satellite network. The voicemail facility operates as described in our WO 97/23963 published on 3 July 1997 to provide voicemail when a user terminal cannot be reached and in the event of a call dropout, as will be explained in more detail hereinafter. The voicemail facility 5 may be located at or near the NMC 16 or at any other convenient location in the network.

### GSM Network (PLMN 12)

Referring again to Figure 3, the GSM mobile network 12 includes a number of base transceiver stations BTS 1, 2, 3 etc which are geographically spaced apart in order to support a cellular network in a manner well known ***per se*****.**

Typically, the GSM network has a coverage area that overlies a country or state, and is thus overlaps with the global coverage of the satellite network. BTS 1 is shown with an associated antenna 13, connected by a landline to a base switching centre BSC 1, it being understood that a plurality of BTSs are connected to BSC 1 in a manner well known ***per se***. The BSC 1 is connected to a mobile switching centre MSC 1 which can route calls within the mobile network and also through a gateway GMSC 1 to a conventional PSTN over line 18, or to the satellite network, over line 19 through the gateway GW 1. Thus, calls can be routed through the GSM network to and from UT 1.

A home location register HLR for the land-based GSM network 12 is provided coupled to the GMSC 1. The HLR, in a conventional manner, keeps a record of the IMSIs of the user terminals registered for use with the network and details of the subscribers associated with the IMSIs for billing purposes. The PLMN 12 may also include a visitor location register VLR which maintains a record of subscribers temporarily registered with the network, that have roamed from other GSM networks.

### Mobile user terminal (UT1)

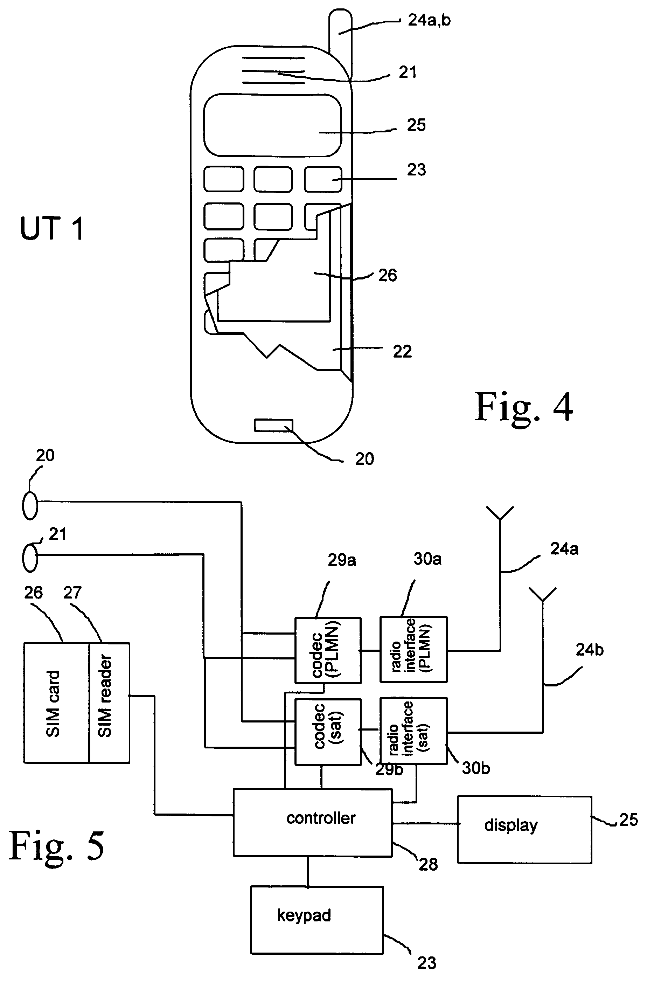

Referring to Figures 4 and 5, the mobile user terminal UT 1 is a dual mode unit, configured to operate with both the local terrestrial cellular network and the satellite network. Thus, in the example shown in Figure 3, the mobile handset UT 1 can operate either according to a land-based GSM protocol or according to the satellite network protocol. As shown in Figure 4, the user terminal UT 1 comprises a mobile handset which is capable of dual mode operation. It includes conventional GSM circuits for use with the land-based cellular network 12 together with similar circuitry for use with the satellite network. The handset comprises a microphone 20, a speaker 21, a battery 22, a keypad 23, antennas 24a,b for the land-based network and the satellite network respectively, and a display 25 which can be used amongst other things, for displaying messages transmitted to the terminal via the satellite link. The handheld unit UT 1 also includes a subscriber identification module (SIM) smartcard 26.

The circuit configuration of the handset UT 1 is shown in block diagrammatic form in Figure 5. The SIM card 26 is received in an SIM card reader 27 coupled to a controller 28, typically a microprocessor. The microphone and speaker 20, 21 are coupled to codecs 29a,b and radio interfaces 30a,b for the land-based network and the satellite network respectively, that are respectively connected to the antennas 24a,b so as to transmit and receive communication signals, for the networks individually in a manner well known ***per se**.*

### Call forwarding on dropout

As previously explained, when a call has been set up between the telephone set 1 and the user terminal UT1 there is a risk that the radio communication link 3 will drop out due to a number of different factors. For example, the mobile user of UT1 may enter a building which acts as a screen preventing radio signals reaching the user terminal from the satellite.

In accordance with the invention, in the event of a dropout, the call is routed to an alternative termination, selected prior to the call dropout. In this example, three alternative terminations will be described. A first alternative termination comprises the telephone set 6, which is physically close to the location of the user of the mobile terminal UT1. Thus, in the event of a call dropout, the call from telephone set 1 may be routed through PSTN 11 to telephone set 6 so that the mobile user may continue the call through the telephone set 6 rather than the mobile terminal UT1.

A second alternative termination is the voicemail facility 5. As explained in our WO97/23963, this can provide a facility by which the caller at telephone set 1 can leave a message so as to "round-off" the conversation in the event that the dropout occurred at an inopportune moment in the telephone conversation. The message can be subsequently interrogated using the user terminal UT1, via the communication link 3, we re-established after the dropout, so as to allow the mobile user to hear the message. The operation of the voicemail facility 5 is described in more detail in out WO97/23963 ***supra***.

A third alternative termination comprises an attempt to re-route the call through the PLMN 12, in which case, the call is routed through line 19 (Figure 3) to GMSC1, to BTS1 and over the radio link 14 to the dual mode user terminal UT1. Typically, the signal strength for the land-based PLMN is greater than that for the radio link 3 of the satellite network, and consequently, it may be possible to establish a communication link in this manner, in the event that the radio link 3 drops out.

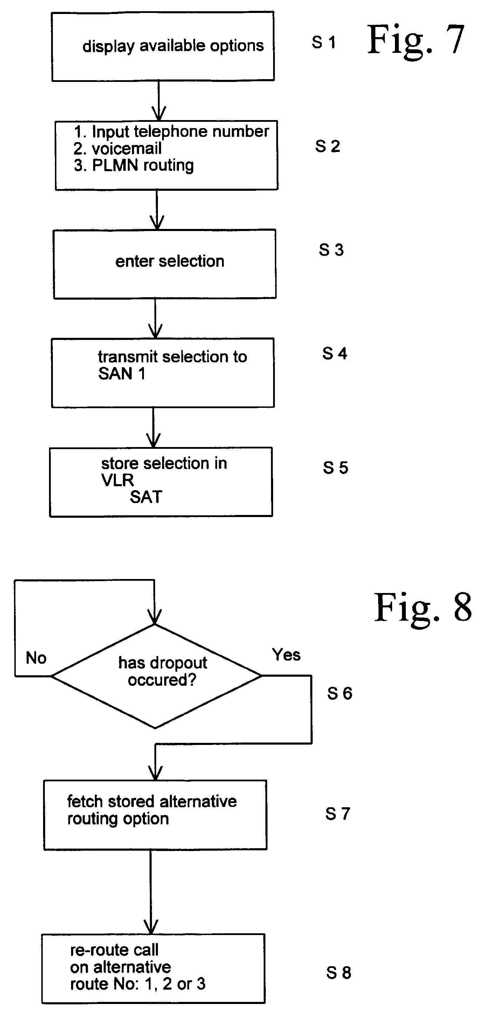

The three alternative terminations are shown schematically in Figure 6. The communication path for the call extends between the telephone set 1, the SAN1 and user terminal UT1 via the radio link 3. When this drops out, the call is routed to one of the three alternative terminations, along 1st, 2nd and 3rd alternative routes respectively. Thus, the 1st alternative route terminates at the telephone set 6, the 2nd alternative route terminates at the voicemail facility 5 and the 3rd alternative route terminates at the user terminal UT1 via the PLMN 12.

The choice of the 1st, 2nd or 3rd alternative route is determined by the user, prior to the dropout of radio link 3. Thus, at a time before the call was commenced, the user of UT1 transmits a message over the radio link 3 to SAN1 with details of the user's preference of alternative termination in the event of a call dropout. For example, if the user terminal has entered a building and is close to the telephone set 6, the user sends via the user terminal UT1 details of the telephone number of the telephone set 6 to SAN1 via the link 3. Details of the preference may be stored in VLR_{SAT1} shown in Figure 3.

Figure 7 illustrates the procedure carried out at the user terminal UT1 to provide the SAN1 with details of the user's preference for alternative routing in the event of a dropout. The mobile user operates the keypad 23 (Figures 4 and 5) to select a menu option concerning the user's preference. In a first step S1 shown in Figure 7, the user requests a display on the display 25 of the user terminal, of the available alternative terminations for use in the event of a call dropout, and these are displayed in step S2. The user then enters a selection at step S3, to indicate the user's preference. If the call is to be routed to an alternative telephone set 6, the telephone number is keyed in, using the keypad 23.

At step S4, the selection is transmitted from the user terminal UT1 over the path 3, via the satellite 7a, to SAN1.

The received data is stored in VLR 1_{SAT} in association with the IMSI for the user terminal UT1.

After a call has been established between the user terminal UT1 and telephone set 1, and the call subsequently drops out due to a break in the communication link 3 between SAN1 and UT1, the dropout is detected by MSSC 1 at step S6 shown in Figure 8. Then, at step S7, data concerning the preselected alternative termination is fetched from VLR 1 _{SAT}.

Then, at step S8, the MSSC1 re-routes the call to the preselected alternative termination, so as to follow one of the 1st, 2nd or 3rd alternative routes shown in Figure 6.

Many modifications and variations will be apparent to those skilled in the art. For example, instead of pre-selecting a single alternative termination, the selection may comprise a preferred list of numbers in a predetermined order of priority so that the alternative routing firstly attempts the alternative termination with the highest priority, then the next highest priority and so on in an attempt to make a call connection.

Also, one of the alternative terminations may be provided as a default, for example the voicemail facility 5. Thus, if the mobile user does not bother to make a selection in the manner shown in Figure 7, the voicemail facility 5 will always be offered in the event of a call dropout.

Furthermore, whilst the invention has been described in relation to a satellite network, it will be appreciated that it is also applicable to land-based mobile networks and could for example be provided as a facility for the PLMN 12 shown in Figure 2, for calls made through the PLMN in a conventional manner. The alternative terminations for the PLMN 12 could include routing to the user terminal UT1 through the satellite network.

Many other modifications fall within the scope of the invention. For example, whilst the invention is described in relation to the ICO™ satellite network, other satellite networks could be used, e.g. of the types discussed hereinbefore, with different satellite constellations and signal transmission protocols.

Also, whilst the signal communication on the path 3 utilises a TDMA access protocol, others could be used, such as code division multiple access (CDMA) or frequency division multiple access (FDMA).

Although for the sake of convenient explanation, the term "mobile" has been used to denote the user terminals UT, it should be understood that this term is not restricted to hand-held or hand portable terminals, but includes, for example, terminals to be mounted on marine vessels or aircraft, or in terrestrial vehicles. Also, it is possible to practice the invention with some of the terminals being completely or at least partially immobile.

It will be understood that various components of the described examples of the invention may be located in different national jurisdictions. For the avoidance of doubt, the present invention extends to any part of component of the telecommunications apparatus or systems, which contributes to the inventive concept.

## Claims

1. A method of forwarding a call made over a telecommunications link between first and second telecommunications stations, in the event that the link drops out during the call, including automatically forwarding the call from one of the stations to a selectible alternative termination upon the occurrence of the dropout, the alternative termination having been selected prior to the dropout.

2. A method according to claim 1 wherein one of the telecommunications stations comprises a mobile user terminal, and including the step of selecting the alternative termination from the user terminal prior to said dropout.

3. A method according to claim 2 wherein the mobile user terminal is a dual mode terminal operable with different mobile networks, wherein said link is established through a first of the networks, and the selected alternative termination comprises said user terminal when reached through a second of the networks.

4. A method according to claim 1 wherein the alternative termination offers a voicemail service.

5. A method according to claim 1 wherein the alternative termination comprises an alternative subscriber terminal.

6. A method according to claim 5 wherein the alternative subscriber terminal comprises a PSTN terminal.

7. A method according to claim 5 wherein the alternative subscriber terminal comprises a mobile station for a mobile network.

8. A method according to claim 5 wherein the link is established through a radio telephone network, and the alternative subscriber terminal is external to the radio network.

9. A method according to claim 8 wherein the radio network comprises a satellite network.

10. A method according to claim 8 wherein the radio network comprises a PLMN.

11. A mobile user terminal configured to perform the method claimed in claim 2.

12. A mobile user terminal to make or receive a call over a telecommunications link, operable to select an alternative termination for the call so that in the event that the link drops out during the call, it is automatically forwarded to the selected alternative termination upon the occurrence of the dropout.

13. A telecommunications network including:
call forwarding equipment for automatically forwarding a call made over a telecommunications link through the network between first and second telecommunications stations, in the event that the link drops out during the call, to a selectible alternative termination, and
an alternative termination selection device for selecting the alternative termination, prior to the dropout.

14. A network according to claim 13, comprising a satellite network.

15. A network according to claim 13, which comprises a PLMN.
